# EUROPEAN PATENT APPLICATION

(11) **EP 4 730 306 A1**
(43) Date of publication of application: **22.04.2026**
(21) Application number: 24207319.5
(22) Date of filing: 17.10.2024
(51) Int. Cl.: G09F 11/30, G09F 23/00, H04N 5/65

(54) **SYSTEM FOR COVERING AN OBJECT, SUCH AS A FLATSCREEN TELEVISION, WINDOW OR SAFE, MOUNTED ON AND/OR IN A WALL**

(71) Applicant: Studio Parade, 5211 TD 's-Hertogenbosch (NL)
(72) Inventor: Berendsen, Paulien, 5211 TD 's-Hertogenbosch (NL); Eck, Niek, 5211 TD 's-Hertogenbosch (NL)
(74) Representative: De Vries & Metman

(57) **Abstract**

The invention relates to a system (1) for covering an object, such as a flatscreen television (2), window or safe, mounted on and/or in a wall (3), the system comprising a bar (4) attached to the wall (3) and above the object (2), and a decorative wall hanging, such as a tapestry (10), cloth or poster, draped over the bar. One end of the wall hanging (10) is provided with a counterweight (12) and the wall hanging (10) is movable between a first position wherein the object (2) is visible and second position wherein the object (2) is covered.

## Description

The present invention relates to a system for covering an object, such as a flatscreen television, window or safe, mounted on and/or in a wall, which system comprises a bar, such as a rod or tube, attached to the wall and above the object and preferably extending at least substantially horizontally and/or parallel to the wall and/or at least substantially parallel to an upper edge of the object. The invention also relates to a kit for assembling such a system.

WO 95/07002 relates to a cover unit for a flat panel video display for deploying a flexible cover over the display. The cover unit can be separate from the display, both of which can be mounted on or in a wall or the cover unit and the flat panel display can be in the same housing which can be mounted on or within a wall. In the embodiment shown in Figures 4 and 4A of WO 95/07002, the video display part is to be mounted either on the wall or within it. The cover is provided in a casing which is shown as being generally semi-cylindrical in shape. The casing is fastened to the wall.

It is an object of the present invention to provide an improved system for covering an object mounted on and/or in a wall.

To this end, the system according to the present invention comprises a decorative wall hanging, such as a tapestry, cloth or poster, which is draped over the bar,
one end of the wall hanging is provided with a counterweight, and
the wall hanging is movable between a first position wherein the object is visible and second position wherein the object is covered.

In an embodiment, at least a top part of the wall hanging is flexible.

In this context, the words "top", "upper", "bottom", and "lower" refer to the wall hanging in the second position, i.e. with the greater part or all of the wall hanging visible and the object behind it, hidden from view. In the first position the top part of the wall hanging typically will extend behind the bottom part of the wall hanging.

It is preferred that at least the upper 40% of the total height of the wall hanging, e.g. the top half of the wall hanging, is flexible.

In an embodiment, at least a lower part of the wall hanging is stiffened.

The function of the stiffening is to initiate the sliding upwards of the wall hanging until the counterweight takes over the sliding/motion, i.e. starts pulling on the wall hanging, to uncover the object.

The stiffening can be a flat structure, such as frame, cross, or plate, that forms part of or is attached to, e.g. by means of Velcro or an adhesive, e.g. double sided tape, to the rear side of the lower part of the wall hanging. The stiffening can be made e.g. from wood, metal, plastic, or stiffened textile. The stiffening can also be in the material of the wall hanging itself, for example by adding glue, resin, or paint, and/or the bottom part of the wall hanging can be made from a material that is inherently stiff.

In an embodiment, the counterweight is attached to and/or extends along the top edge of the wall hanging.

It is preferred that the counterweight has sufficient weight to pull the rear part of the wall hanging down when the front or bottom part is lifted, e.g. over 10% of the height (length) of the wall hanging. The counterweight can consist of a single element or comprise a plurality of elements that are attached, e.g. clamped and/or bolted, to the wall hanging, as will be explained in detail in the example below. The material, shape and dimensions of the counterweight can be selected depending on the material of the wall hanging. E.g., the counterweight can be made from a high density material, such as steel, and/or be shaped as a rod.

In an embodiment, the bar carrying the wall hanging is rotatable, e.g. rotatably mounted in brackets and/or guiderails attached to the wall.

The bar can be a tube or rod that is provided with bearings. The bar can be made e.g. from metal, wood, or a synthetic material, such as a thermoplastic polymer.

In an embodiment, at least the upper half of the bar over which the wall hanging has been draped is round.

In an embodiment, the bar is positioned parallel to the upper edge of the object and at a vertical distance above that edge that is equal to or larger than the height of the object.

It is preferred that the bar and mounting means, in particular guiderails, in combination with the counterweight, also perform the function of straightening the wall hanging, i.e. ensure that the wall hanging hangs sufficiently straight and/or flat, e.g. parallel to the wall.

In an embodiment, the bar and/or the counterweight are adjustable, e.g. telescopically and/or slidably adjustable, to adapt to the width of the wall hanging.

In a refinement, the mounting means, such as guiderails, provide one or more end stops for the wall hanging to define the first (or folded) position and/or the second (or extended/deployed position) of the wall hanging.

In an embodiment, the bar is attached to the wall by (vertical) guiderails and the counterweight comprises guide elements, such as gliders or rollers, operatively coupled to the guiderails.

In an embodiment, the distance between the object and the bar is equal to or larger than the height (H) of the object and/or the total height of the wall hanging is at least twice the height of the object.

Examples of wall hangings include tapestries, patchworks, cloths, canvases, leathers, and posters.

The system according to the present invention can remain virtually invisible, and (in the second or extended position) make a wall hanging, such as a tapestry, stand out and hide something behind it, and (in the first or folded position) make functionally available what is behind, such as a television, window or safe.

Also, the mounting system according to the present invention can be combined with various wall hangings, including wall hangings that were not designed with the present invention in mind. Accordingly, the present invention also relates to a kit that can be combined with a wall hanging that is obtained separately from the kit.

The kit comprises a bar, such as a rod or tube, to be attached to a wall and above an object, preferably at least substantially horizontally and/or parallel to the wall and/or at least substantially parallel to an upper edge of the object, such that a decorative wall hanging can be draped over the bar, and
a counterweight to be attached to the decorative wall hanging, such that the wall hanging is movable between a first position wherein the object is visible and second position wherein the object is covered.

In an embodiment, the kit comprises a stiffening, in particular (components for assembling) a flat structure, such as a frame, cross, or plate, that can be attached, e.g. by means of Velcro or an adhesive, e.g. double sided tape, to the rear side of the lower part of the wall hanging.

In an embodiment, the kit comprises mounting elements, such as brackets or rails, to be attached to the wall and to receive and support the bar, preferably rotatably receive and support the bar.

In an embodiment, the bar is provided with bearings, preferably at its ends, and/or the bar has a round cross-section.

In another embodiment, the kit comprises guiderails configured to be attached to the wall vertically, and preferably entirely above the object, and the counterweight comprises guides, such as gliders or rollers, operatively couplable to the guiderails.

In an embodiment, the mounting elements, such as guiderails, provide one or more end stops for the wall hanging to define the first (or folded) position and/or the second (or extended/deployed position) of the wall hanging.

For the sake of completeness, attention is drawn to the following patent publications.

DE 10 2005 062 227 relates to a flat screen (reference sign in 1 DE 10 2005 062 227) "and a frame (2) that forms a spatial unit with a left and right holding devices (9) for a roller blind. The screen is surrounded by the frame. A cover (4) is provided between the holding devices to cover the roller blind. The frame, the holding devices and the cover are formed of a piece, where the frame is formed with the holding devices as a detachable connection or the frame is stuck and welded with the holding devices as an unsolvable connection." (Machine translation provided in *Espacenet*.)

US2006/0124566 discloses an ornamental structure, which includes an ornament that can be a picture or any of a variety of artwork for decorating a thin type planar TV and keeping the thin type planar TV from sight when not watching, and a support unit that supports the ornament and allows the ornament to be alternatively set between a first position to keep the thin type planar TV from right and a second position to let the thin type planar TV be seen.

The invention will now be explained in more detail with reference to the drawings.
Figures 1A and 1B are a perspective view and a side view of the system according to the present invention with a wall hanging in the folded or first position.
Figures 2A and 2B are a perspective view and a side view of the system according to the present invention with a wall hanging in the extended or second position.
Figure 3 is a side view of a bar used in the system shown in Figures 1A to 2B.
Figures 4A, 4B, and 4C are a bottom view, a rear view, and a cross-sectional view of a counterweight, clamped on and bolted to the upper edge of a wall hanging as used in the system shown in Figures 1A to 2B.
Figure 5 contains side and front views of a left and right guiderails.
Figure 6 contains bottom and rear views of a frame for stiffening the lower portion of a wall hanging as used in the system shown in Figures 1A to 2B.

The Figures are schematic, not necessarily to scale and details that are not required for understanding the present invention may have been omitted. Terms such as "left", "right", "above", "below", relate to the embodiments as oriented in the drawings, unless otherwise specified.

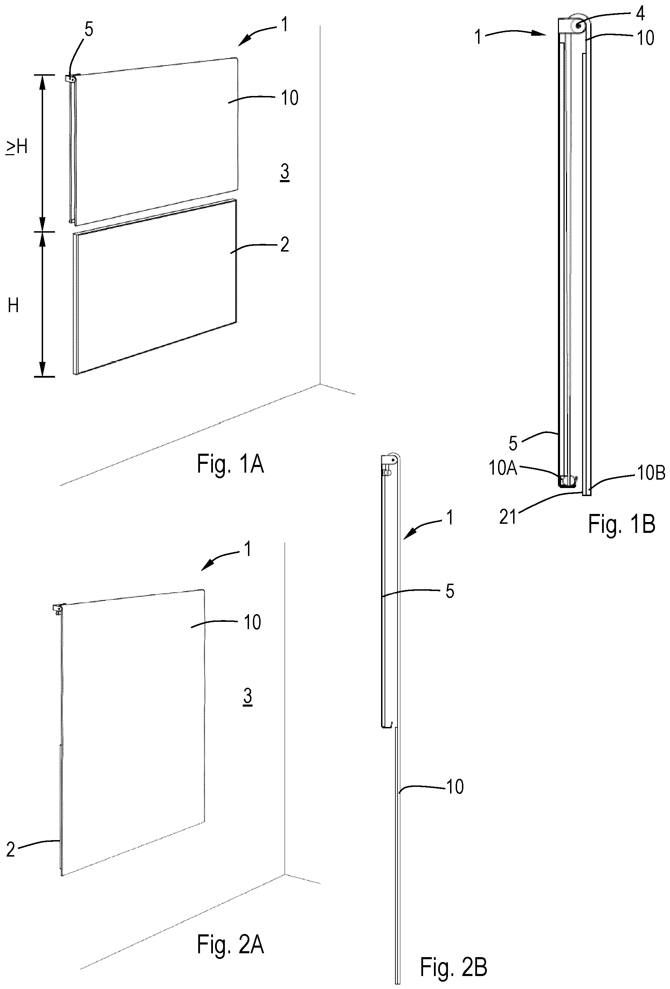

Figures 1A to 2B show a system 1 for covering an object, in this example a flatscreen television 2, mounted on a wall 3. The system comprises a bar 4 attached to the wall by means of mounting elements, in this example guiderails 5 that extend vertically.

The bar is positioned parallel to the upper edge of the object and at a vertical distance above that edge that is equal to or larger than the height H of the object (see Figure 1A).

A decorative wall hanging, for example a relatively thick and heavy wall tapestry 10 having a width of e.g. 1,4 meter or 1,6 meter, is draped over the bar. The wall hanging is movable between a first position, shown in Figures 1A and 1B, wherein the object is visible, and a second position, shown in Figures 2A and 2B, wherein the object is covered. In the first position, the upper edge 10A of the wall hanging 10 is at the same height as the lower edge 10B of wall hanging (see Figure 1B).

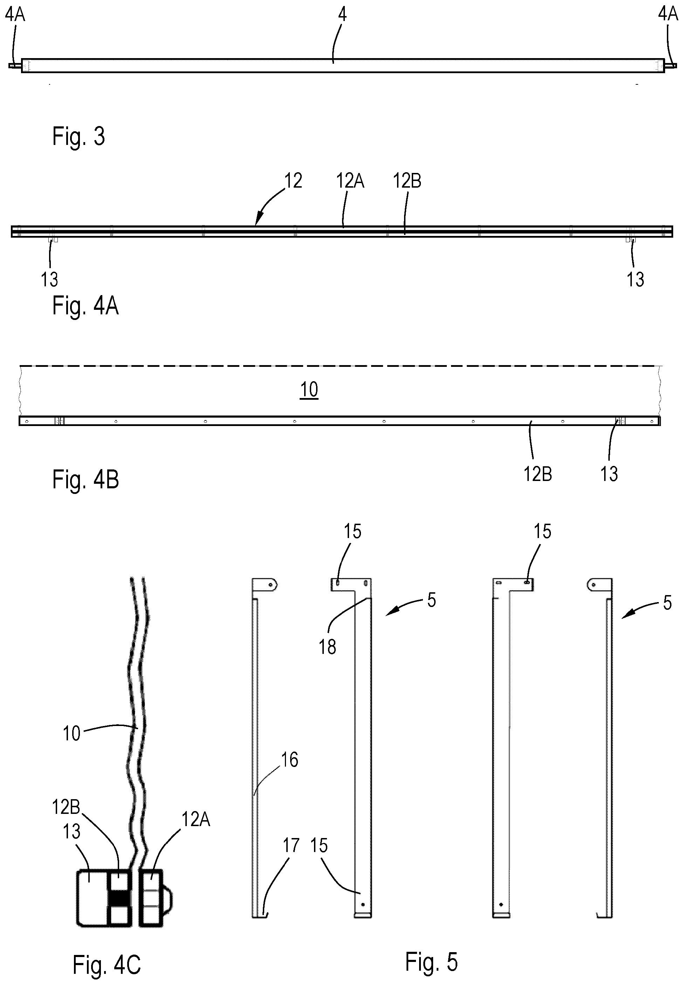

As shown in Figures 1B and 3, the bar 4 has a round cross-section and is essentially a metal rod with a bearing, e.g. a ball bearing, and a smaller diameter portion 4A at each end. The ends are fitted in corresponding holes in the guiderails, which are shown in more detail in Figure 5.

A counterweight 12 is attached to and extends along the entire top edge of the wall hanging 10. As shown in Figures 4A, 4B, and 4C, the counterweight 12 comprises two halves 12A, 12B that are bolted together with the top edge of the wall hanging 10 sandwiched between the halves, see in particular Figure 4C. The counterweight has sufficient weight to pull the rear or top part of the wall hanging down when the front or bottom part is lifted, e.g. over 10% of the height (length) of the wall hanging. In this example the counterweight has been made from metal, e.g. steel. The counterweight is provided with two gliders 13 made e.g. of a synthetic material, such as polyamide (nylon), that slide over the guiderails 5 when the tapestry is moved between the first and second positions.

The guiderails 5 extend vertically and are provided with means, such as a holes 15 for screws, to securely attach the rails 5 to the wall 3. Each of the guiderails has a blade 16 that extends perpendicular to the wall and that is aligned in the horizontal direction with one of the gliders 13 in the counterweight. The blades and gliders are positioned inwardly at a distance of e.g. 5 centimeters or more, e.g. 20 cm, from the side edges of the wall hanging and the guiderails are practically hidden from view by the same. Each of the guiderails 5 further has a lower stop 17 to define the first position (Figure 1A) of the wall hanging 10 and an upper stop 18 to define the second position (Figure 2A) of the wall hanging 10.

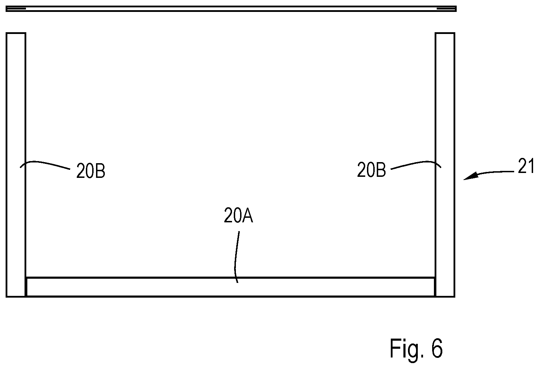

As shown in Figure 6, in this example, the bottom part, approximately the lower half of the wall hanging, is stiffened. The function of the stiffening is to be able to initiate the sliding upwards of the wall hanging until the counterweight takes over the sliding, i.e. starts pulling on the wall hanging, to uncover the object. In this example, the stiffening comprises three strips 20A, 20B, e.g. made of wood, that are interconnected to form a flat, U-shaped frame. The frame is attached to the rear side of the lower part of the wall hanging e.g. by means of Velcro or an adhesive, e.g. double sided tape.

The above system is virtually invisible and in the second or extended position makes the wall tapestry stand out to its full potential and hides something behind it. Moreover, the flatscreen television remains available if and when desired.

The invention is not limited to the embodiment as described above, which can be varied in several ways within the scope of the claims.

## Claims

1. System (1) for covering an object, such as a flatscreen television (2), window or safe, mounted on and/or in a wall (3), the system comprising
a bar (4) attached to the wall (3) and above the object (2),
a decorative wall hanging, such as a tapestry (10), cloth or poster, draped over the bar,
wherein one end of the wall hanging (10) is provided with a counterweight (12) and
the wall hanging (10) is movable between a first position wherein the object (2) is visible and second position wherein the object (2) is covered.

2. System (1) according to claim 1, wherein at least an upper part of the wall hanging (10) is flexible.

3. System (1) according to claim 1 or 2, wherein at least a lower part of the wall hanging (2) is stiffened (21) .

4. System (1) according to any one of the preceding claims, wherein the counterweight (12) is attached to and/or extends along the top edge of the wall hanging (10).

5. System (1) according to any one of the preceding claims, wherein the bar (4) is rotatable.

6. System (1) according to any one of the preceding claims, wherein at least the upper half of the bar (4) is round.

7. System (1) according to any one of the preceding claims, wherein the bar (4) is attached to the wall (3) by mounting means, such as brackets or guiderails (5).

8. System (1) according to claim 7, wherein mounting means (5) provide one or more end stops (16) for the wall hanging (10) to define the first position and/or the second of the wall hanging (10).

9. System (1) according to any one of the preceding claims, comprising guiderails (5), preferably extending vertically, wherein the counterweight (12) comprises guide elements (13) operatively coupled to the guiderails (5).

10. System (1) according to any one of the preceding claims, wherein the distance between the object (2) and the bar (4) is equal to or larger than the height (H) of the object (2) and/or the total height of the wall hanging (10) is at least twice the height (H) of the object (2) .

11. Kit for assembling a system (1) according to any one of the preceding claims, comprising a bar (4) to be attached to a wall (3) and above an object (2), such that a decorative wall hanging (10) can be draped over the bar (4), and
a counterweight (12) to be attached to the decorative wall hanging (10), such that the wall hanging (10) is movable between a first position wherein the object (2) is visible and second position wherein the object (2) is covered.

12. Kit according to claim 11, comprising a stiffening (21) that can be attached to the rear side of the lower part of the wall hanging (10).

13. Kit according to claim 11 or 12 comprising mounting elements (5) to be attached to the wall (3) and to receive the bar (4).

14. Kit according to any one of the claims 11-13, wherein the bar (4) is provided with bearings, preferably at its ends, and/or the bar (4) has a round cross-section.

15. Kit according to any one of the claims 11-14, comprising guiderails (5) configured to be attached to the wall (3) vertically and wherein the counterweight (12) comprises guides, such as gliders (13) or rollers, operatively couplable to the guiderails (5).
